# EUROPÄISCHE PATENTANMELDUNG

(11) **EP 0 808 050 A1**
(43) Veröffentlichungstag der Anmeldung: **19.11.1997**
(21) Anmeldenummer: 97106224.5
(22) Anmeldetag: 16.04.1997
(51) Int. Cl.: H04M 1/57, H04M 19/08

(54) **Fernsprechendgerät**

(30) Priorität: 15.05.1996 DE 19619610
(71) Anmelder: ROBERT BOSCH GMBH, 70442 Stuttgart (DE)
(72) Erfinder: Lange, Heinz, 65933 Frankfurt (DE)

(57) **Zusammenfassung**

Es wird ein Fernsprechendgerät vorgeschlagen, das zur Anzeige von Rufinformationen eines ankommenden Rufes dient. Das Fernsprechendgerät umfaßt eine Anzeigevorrichtung (5), insbesondere zur alphanumerischen Anzeige der Rufinformation, eine Eingangsstufe (10) zur Aufbereitung von bei ankommenden Rufen übertragenen Rufinformationen und eine Steuerung (1), die mit der Anzeigevorrichtung (5) und der Eingangsstufe (10) verbunden ist. Das Fernsprechendgerät wird durch das an das Fernsprechendgerät anschließbare Telefonnetz mit Energie versorgt. Bei einem ankommenden Ruf ist ein im Fernsprechendgerät befindlicher Energiespeicher (15) während des Ruftons und/oder während der Belegung der Fernsprechschleife mit Energie aufladbar. Während der Ruftonpause dient der Energiespeicher (15) zur Energieversorgung zumindest der Steuerung (1), der Anzeigevorrichtung (5) und der Eingangsstufe (10).

## Beschreibung

### Stand der Technik

Die Erfindung geht von einem Fernsprechendgerät nach der Gattung der unabhängigen Ansprüche 1 und 3 aus.

Aus der DE 36 07 166 A1 ist eine Vorrichtung zum automatischen Aufzeichnen von eingehenden Anrufen für Fernsprechapparate bekannt. Die Vorrichtung umfaßt eine Steuerung, die mit einer Anzeigevorrichtung und einer Eingangsstufe zur Aufbereitung von bei ankommenden Rufen übertragenen Rufinformationen, bestehend aus Verstärker, MFV-Filter und MFV-Decoder, verbunden ist. Mit Hilfe der Anzeigevorrichtung lassen sich Rufinformationen alphanumerisch darstellen. Die Vorrichtung ist an Leitungsadern einer Amtsleitung anschließbar, wobei die Leitungsadern auch eine Umschaltung steuern, die an einen Fernsprechapparat anschließbar ist. Ein Netzteil dient zur Stromversorgung der Logikteile und eines Eingangsverstärkers.

### Vorteile der Erfindung

Das erfindungsgemäße Fernsprechendgerät mit den Merkmalen der unabhängigen Ansprüche 1 und 3 hat demgegenüber den Vorteil, daß zur Aufbereitung von bei ankommenden Rufen übertragenen Rufinformationen, zu deren Auswertung und zu deren Anzeige keine externe Stromversorgung erforderlich ist, sondern die während Schleifenbelegung oder Tonruf in einen Energiespeicher geladene Energie zu diesem Zweck verwendet wird. Auf diese Weise läßt sich das Leistungsmerkmal der Anzeige von Rufinformationen preiswert und platzsparend ohne Netzteil auf einfache Weise realisieren.

Durch die in den Unteransprüchen aufgeführten Maßnahmen sind vorteilhafte Weiterbildungen und Verbesserungen der in den unabhängigen Ansprüchen angegebenen Fernsprechendgeräte möglich.

Besonders vorteilhaft gemäß den Ansprüchen 6 bis 9 ist die Verwendung von gesteuerten Schaltern zum Laden und Entladen des Energiespeichers, wobei die gesteuerten Schalter durch Steuersignale von der Steuerung so geschaltet werden, daß bei Schleifenbelegung und/oder Tonruf der Energiespeicher aufgeladen wird und jeweils in einem Zeitraum zwischen den Rufsignalen eines ankommenden Rufes die Verbindung des Energiespeichers mit der Steuerung, der Anzeigevorrichtung und der Eingangsstufe hergestellt wird. Auf diese Weise wird der Lade- und der Entladevorgang auf besonders einfache und durch Verwendung gängiger Bauteile auf besonders preiswerte Weise gesteuert.

Vorteilhaft nach Anspruch 10 ist die Öffnung des sechsten gesteuerten Schalters 80 nach Übertragung der Rufinformation in dem Zeitraum zwischen den Rufsignalen des ankommenden Rufes. Auf diese Weise wird Energie gespart, da die Eingangsstufe nach Übertragung der Rufinformation nicht mehr gebraucht wird.

Vorteilhaft nach Anspruch 11 ist die Verwendung von Widerständen zur Ladestrombegrenzung. Auf diese Weise wird erreicht, daß bei Schleifenbelegung und/oder Tonruf trotz gleichzeitigem Laden des Energiespeichers noch ausreichend Energie zur Verfügung steht und somit nur eine unwesentliche Beeinträchtigung der entsprechenden Funktionen in Kauf genommen werden muß.

### Zeichnung

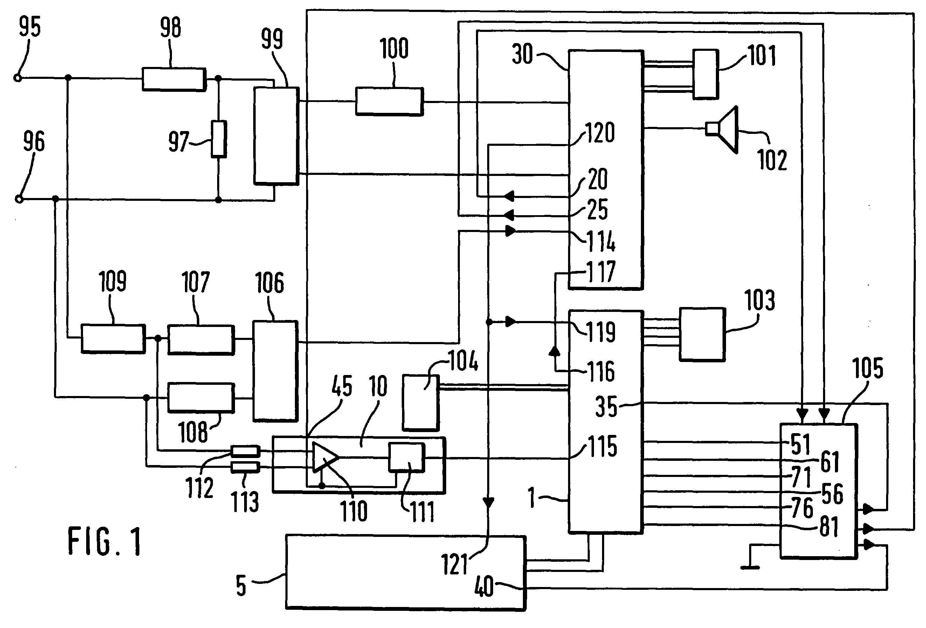

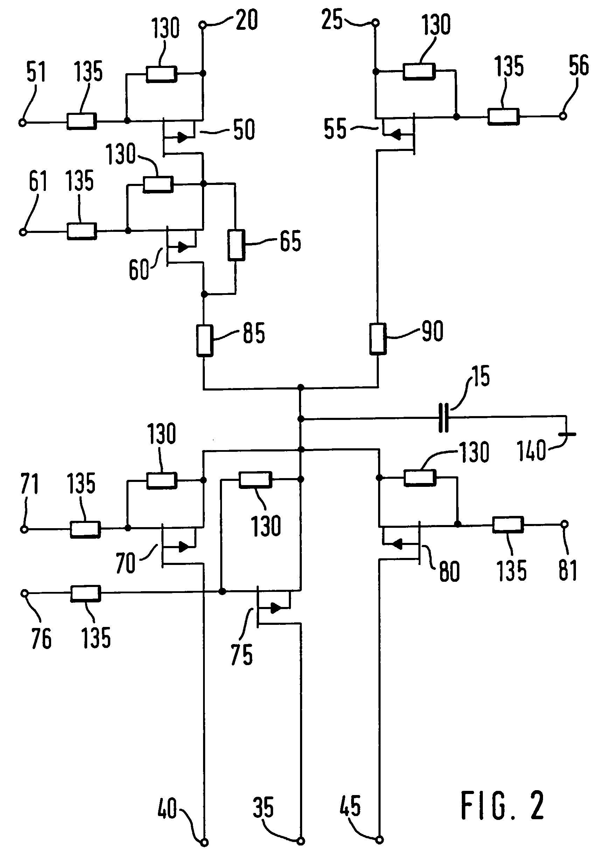

Ein Ausführungsbeispiel der Erfindung ist in der Zeichnung dargestellt und in der nachfolgenden Beschreibung näher erläutert. Es zeigen Figur 1 ein Blockschaltbild des Fernsprechendgerätes und Figur 2 einen Schaltplan für die Spannungsversorgung der Steuerung, der Anzeigevorrichtung und der Eingangsstufe durch einen Energiespeicher.

### Beschreibung des Ausführungsbeispiels

In Figur 1 kennzeichnet 95 eine erste Leitungsader a und 96 eine zweite Leitungsader b einer Amtsleitung des Netzbetreibers. Die erste Leitungsader 95 ist über eine 16-kHz-Bandsperre 98 und einen Varistor 97 mit der zweiten Leitungsader 96 verbunden. Dem Varistor 97 ist ein erster Gleichrichter 99 parallelgeschaltet. Der erste Gleichrichter 99 ist über einen Nummernschalterimpulskontakt-Transistor 100 zweiadrig mit einem Sprechkreis 30 verbindbar. An den Sprechkreis 30 sind ein Handapparat 101 und ein Lautsprecher 102 angeschlossen. Die erste Leitungsader 95 ist außerdem über eine W-Ader-Abschaltung 109, eine erste Tonrufimpedanz 107, einen zweiten Gleichrichter 106 und eine zweite Tonrufimpedanz 108 mit der zweiten Leitungsader 96 verbunden. Der zweite Gleichrichter 106 ist an einen Tonrufeingang 114 des Sprechkreises 30 angeschlossen. Ein aktives Filter 110 einer Eingangsstufe 10 zur Aufbereitung von Rufinformationen bei ankommenden Rufen ist über seine zwei Signaleingänge einerseits über eine erste Eingangsimpedanz 112 zwischen der W-Ader-Abschaltung 109 und der ersten Tonrufimpedanz 107 und andererseits über eine zweite Eingangsimpedanz 113 an die zweite Leitungsader 96 angeschlossen. Das Filter 110 ist ausgangsseitig mit einem Komparator 111 verbunden, der an einem Rufidentifikationseingang 115 einer beispielsweise als Mikroprozessor ausgeführten Steuerung 1 angeschlossen ist. An die Steuerung 1 ist außerdem ein EEPROM 104, eine Tastatur 103, über sechs Verbindungsleitungen eine Spannungsversorgung 105 und eine Anzeigevorrichtung 5 angeschlossen. Ein Tonrufausgang 116 der Steuerung 1 ist mit einem Lauthöreingang 117 des Sprechkreises 30 verbunden. Ein erster Spannungsversorgungseingang 40 der Anzeigevorrichtung 5, ein erster Spannungsversorgungseingang 35 der Steuerung 1 und ein Eingang 45 der Eingangsstufe 10 zur Versorgung des Filters 110 und des Komparators 111 mit Spannung sind mit jeweils einem Ausgang der Spannungsversorgung 105 verbunden. Ein erster Versorgungsspannungsausgang 20 des Sprechkreises 30, inbesondere für Lauthören bei belegter Schleife und ein zweiter Versorgungsspannungsausgang 25 des Sprechkreises 30 für Tonruf sind mit jeweils einem zugehörigen Versorgungsspannungseingang der Spannungsversorgung 105 verbunden. Ein dritter Versorgungsspannungsausgang 120 des Sprechkreises 30 für Schleifenbelegung und Tonruf ist mit einem zweiten Versorgungsspannungseingang 121 der Anzeigevorrichtung 5 und mit einem zweiten Versorgungsspannungseingang 119 der Steuerung 1 verbunden.

Die 16-kHz-Bandsperre 98 verhindert, daß Gebührenimpulse im Gesprächszustand bis in den Sprechkreis 30 gelangen. Der Varistor 97 stellt eine Schutzmaßnahme für den Sprechkreis 30 vor Überspannungen insbesondere als Folge eines Blitzschlages dar. Der Nummernschalterimpulskontakt-Transistor 100 dient zur Unterbrechung der Schleife, beispielsweise bei Impulswahl und als elektronischer Gabelumschalter. Mit Hilfe des Lautsprechers 102 ist Lauthören und die akustische Wiedergabe eines Tonrufs möglich. Der erste Gleichrichter 99 dient als Verpolungsschutz, so daß der Sprechkreis 30 unabhängig vom Vorzeichen der Gleichspannung des Leitungsadernpaares 95, 96 verpolungssicher an dieses anschließbar ist. Über die W-Ader-Abschaltung 109 wird der Tonrufzweig des Fernsprechendgerätes direkt an das Leitungsadernpaar 95, 96 angeschlossen und über eine geforderte Eingangsimpedanz, die durch die beiden Tonrufimpedanzen 107 und 108 gebildet wird und den zweiten Gleichrichter 106 gelangen die Rufsignale in den Sprechkreis 30. Der Tonruf wird bei Belegung der Schleife durch die W-Ader-Abschaltung 109 von dem Leitungsadernpaar 95, 96 weggeschaltet. Durch die Wegschaltung des Tonrufzweiges vom Leitungsadernpaar 95, 96 bei Schleifenbelegung wird eine Beeinträchtigung des Gesprächszustandes durch Tonruf verhindert. Im Tonrufzustand wird im Sprechkreis 30 über einen Sperrwandler die Energie zur Versorgung einer Endstufe des Lautsprechers 102 generiert. Die entsprechende Versorgungsspannung liegt am zweiten Versorgungsspannungsausgang 25 des Sprechkreises 30 an. Davon abgeleitet liegt am dritten Versorgungsspannungsausgang 120 eine Versorgungsspannung für die Steuerung 1 an. Die Steuerung 1 generiert Melodien für den Tonruf und gibt ein entsprechendes Signal über den Tonrufausgang 116 an den Lauthöreingang 117 des Sprechkreises 30 ab. Ebenfalls hinter der W-Ader-Abschaltung 109 ist der Eingang der Eingangsstufe 10 über die beiden Eingangsimpedanzen 112 und 113 angeschlossen. Dieser Schaltungsteil wird ebenfalls nur bei Tonruf in einem Ruhezustand des Fernsprechendgerätes bei nicht belegter Schleife benötigt. Bei Belegung der Schleife wird die Eingangsstufe 10 durch die W-Ader-Abschaltung 109 von dem Leitungsadernpaar 95, 96 des Fernsprechendgerätes weggeschaltet. Bei Tonruf wird über das Leitungsadernpaar 95, 96 ein Rufinformationssignal zum Fernsprechendgerät übertragen und in der Eingangsstufe 10 gefiltert, verstärkt und für eine Auswertung in der Steuerung 1 vorbereitet. Die eigentliche Auswertung der Informationen des Rufinformationssignals erfolgt in der Steuerung 1 und die Anzeige mittels der Anzeigevorrichtung 5. Die Anzeigevorrichtung 5 kann beispielsweise als Sieben-Segment-Display oder als alphanumerische Anzeige ausgeführt sein. Eine mit dem Rufinformationssignal übertragene Rufnummer eines anrufenden Teilnehmers wird im EEPROM 104 in einer Anrufliste gespeichert. Sie kann vom Benutzer abgerufen und direkt durch die Betätigung einer Wahlwiederholtaste der Tastatur 103 ausgewählt werden. Neben der Rufnummer des anrufenden Teilnehmers kann das Rufinformationssignal auch weitere den Anrufer identifizierende Daten enthalten, die ebenfalls im EEPROM 104 in der Anrufliste abspeicherbar sind. Das Fernsprechendgerät kann auch über weitere Leistungsmerkmale verfügen, wie beispielsweise Freisprechen, Wahl bei aufgelegtem Hörer, Gebührenerfassung, usw. Die dazu erforderlichen Bauteile sind dann dem beschriebenen Ausführungsbeispiel hinzuzufügen.

Die Übertragung der Rufinformation geschieht nun folgendermaßen: In der ersten langen Rufpause zwischen zwei Rufsignalen wird durch FSK-Übertragung (frequency shift keying) ein die Rufinformation und Daten für eine definierte und fehlersichere Übertragung beinhaltendes Protokoll übertragen. Während dieser Zeit befindet sich das Fernsprechendgerät im aufgelegten Zustand, das heißt, der Tonrufzweig und die Eingangsstufe 10 sind noch mit dem Leitungsadernpaar 95, 96 des Fernsprechendgerätes verbunden. Der Nummernschalterimpulskontakt-Transistor 100 ist nicht durchgeschaltet, so daß in diesem Zustand kein Schleifenstrom aus der Schleife gezogen werden kann. Für die Steuerung 1 und die Anzeigevorrichtung 5 kann daher während der Übertragung des Rufinformationssignals keinerlei Energie aus der Schleife entnommen werden. Die Eingangsimpedanz der Eingangsstufe 10 ist außerdem so hochohmig, daß es auch nicht möglich ist, aus dem übertragenen Signal Energie für die Eingangsstufe 10 zu entnehmen. Während der Übertragung des Rufinformationssignals steht daher auch für die Eingangsstufe 10 keinerlei Energie aus der Schleife zur Verfügung. Um die Steuerung 1, die Anzeigevorrichtung 5 und die Eingangsstufe 10 während der Übertragung der Rufinformation und die Steuerung 1 und die Anzeigevorrichtung 5 auch in der nachfolgenden Zeit zwischen Rufsignalen, die zu demselben Anruf gehören, mit Energie zu versorgen, ist die Spannungsversorgung 105 vorgesehen, die in Figur 2 dargestellt ist.

Der Sprechkreis 30 mit integrierter Versorgungsspannungsauskopplung stellt eine Versorgungsspannung VMPS am ersten Versorgungsspannungsausgang 20 für die Endstufe des Lautsprechers 102 bei belegter Schleife zum Lauthören zur Verfügung, die beispielsweise 6,3V beträgt. Außerdem wird am zweiten Versorgungsspannungsausgang 25 des Sprechkreises 30 eine Versorgungsspannung VB für die Endstufe des Lautsprechers 102 bei Tonruf zur Verfügung gestellt, die beispielsweise ebenfalls 6,3V beträgt.

Der Sprechkreis 30 stellt an seinem dritten Versorgungsspannungsausgang 120 eine Versorgungsspannung VMP von beispielsweise 3,3V für die Steuerung 1 und die Anzeigevorrichtung 5 bereit. Dabei ist die Spannung VMP bei belegter Schleife von der Spannung VMPS und bei Tonruf von der Spannung VB abgeleitet. Sie dient bei Tonruf zur Generierung von Tonrufmelodien durch die Steuerung 1. Die Versorgungsspannung VMPS ist der Schleife entnehmbar, die im Gesprächszustand durch den durchgeschalteten Nummernschalterimpulskontakt-Transistor 100 belegt ist. Bei Tonruf ist der Nummernschalterimpulskontakt-Transistor 100 nicht durchgeschaltet, so daß die Energie der Schleife über den Tonrufzweig entnommen wird und dem Sprechkreis 30 über den Tonrufeingang 114 zugeführt wird. Durch den Sperrwandler wird dann die Versorgungsspannung VB generiert.

Es besteht nun die Möglichkeit, die Spannungsversorgung der Steuerung 1 und der Anzeigevorrichtung 5 bei belegter Schleife und/oder im Tonruffall zum Aufladen eines in der Spannungsversorgung 105 befindlichen Energiespeichers 15 zu belasten. Dabei ist die Versorgungsspannung VMPS bei belegter Schleife im Gesprächszustand im beschriebenen Beispiel mit maximal 5 mA und die Versorgungsspannung VB im Tonruffall mit höchstens 1 mA belastbar. Erfolgt Schleifenbelegung bei Programmierung der Steuerung 1 seitens des Benutzers beispielsweise zur Festlegung von Wahlzielen oder einer Grundeinstellung des Fernsprechendgerätes, so ist die Versorgungsspannung VMPS sogar mit bis zu 10 mA belastbar. Durch die angegebenen Belastungen der Versorgungsspannung werden die bei belegter Schleife durchgeführten Funktionen nur unwesentlich beeinträchtigt und die erzielbare Lautstärke der Tonrufsignale im Lautsprecher 102 bei Tonruf nur unwesentlich verringert. Als Energiespeicher 15 zur Energieversorgung für die Steuerung 1, die Anzeigevorrichtung 5 und die Eingangsstufe 10 ist ein Kondensator oder ein Akkumulator mit einer Kapazität von beispielsweise ca. 1 F vorgesehen.

Gemäß Figur 2 ist der Energiespeicher 15 als Kondensator ausgeführt. Der erste Versorgungsspannungsausgang 20 des Sprechkreises 30 ist mit der Source-Elektrode eines p-Kanal-Mosfets verbunden, der einen ersten gesteuerten Schalter 50 darstellt. Der zweite Versorgungsspannungsausgang 25 des Sprechkreises 30 ist mit der Source-Elektrode eines p-Kanal-Mosfets verbunden, der einen zweiten gesteuerten Schalter 55 darstellt. Die Drain-Elektrode des ersten p-Kanal-Mosfets 50 ist mit der Source-Elektrode eines weiteren p-Kanal-Mosfets verbunden, der einen dritten gesteuerten Schalter 60 darstellt. Zwischen die Source-Elektrode und die Drain-Elektrode des dritten p-Kanal-Mosfets 60 ist ein Überbrückungswiderstand 65 geschaltet. Die Drain-Elektrode des dritten p-Kanal-Mosfets 60 ist über einen ersten Widerstand 85 zur Ladestrombegrenzung und den Kondensator 15 mit einem Bezugspotential 140 verbunden. Die Drain-Elektrode des zweiten p-Kanal-Mosfets 55 ist über einen zweiten Widerstand 90 zur Ladestrombegrenzung und den Kondensator 15 mit dem Bezugspotential 140 verbunden. Die nicht mit dem Bezugspotential 140 verbundene Elektrode des Kondensators 15 ist außerdem mit den Source-Elektroden eines vierten, eines fünften und eines sechsten, jeweils als p-Kanal-Mosfet ausgeführten gesteuerten Schalters 70, 75 und 80 verbunden. Die Drain-Elektrode des vierten p-Kanal-Mosfets 70 ist mit dem ersten Versorgungsspannungseingang 40 der Anzeigevorrichtung 5 verbunden. Die Drain-Elektrode des fünften p-Kanal-Mosfets 75 ist mit dem ersten Versorgungspannungseingang 35 der Steuerung 1 verbunden. Die Drain-Elektrode des sechsten p-Kanal-Mosfets 80 ist mit dem Versorgungsspannungseingang 45 der Eingangsstufe 10 verbunden. Zwischen die Gate-Elektrode und die Source-Elektrode aller p-Kanal-Mosfets 50, 55, 60, 70, 75, 80 ist jeweils ein Gate-Source-Widerstand 130 zur Linearisierung des Ausgangskennlinienfeldes des jeweiligen p-Kanal-Mosfets 50, 55, 60, 70, 75, 80 geschaltet. Über jeweils einen Vorwiderstand 135 ist die Gate-Elektrode des ersten p-Kanal-Mosfets 50 mit einem ersten Steuereingang 51, die Gate-Elektrode des zweiten p-Kanal-Mosfets 55 mit einem zweiten Steuereingang 56, die Gate-Elektrode des dritten p-Kanal-Mosfets 60 mit einem dritten Steuereingang 61, die Gate-Elektrode des vierten p-Kanal-Mosfets 70 mit einem vierten Steuereingang 71, die Gate-Elektrode des fünften p-Kanal-Mosfets 75 mit einem fünften Steuereingang 76 und die Gate-Elektrode des sechsten p-Kanal-Mosfets 80 mit einem sechsten Steuereingang 81 verbunden. Für das bisher beschriebene Beispiel werden folgende Dimensionierungen der Bauelemente gewählt: Der Gate-Source-Widerstand 130 beträgt 100 kΩ, der Vorwiderstand 135 beträgt ebenfalls 100 kΩ, der Überbrückungswiderstand 65 beträgt 680 Ω, der erste Widerstand 85 zur Ladestrombegrenzung betragt 680 Ω und der zweite Widerstand 90 zur Ladestrombegrenzung beträgt 4,7 kΩ. Die Steuereingänge 51, 56, 61, 71, 76, 81 der sechs p-Kanal-Mosfets 50, 55, 60, 70, 75, 80 sind jeweils mit der Steuerung 1 verbunden.

Bei belegter Schleife wird die Versorgungsspannung VMPS mit 6,3V erzeugt. Sie dient in erster Linie zur Versorgung der Endstufe des Lautsprechers 102, falls die Option Lauthören gewählt wird. Sie ist aber auch, falls vorhanden, für die Option Freisprechen verwendbar. Bei Schleifenbelegung gibt die Steuerung 1 an den ersten Steuereingang 51 ein Steuersignal ab, so daß der erste p-Kanal-Mosfet 50 durchgeschaltet ist und ein Ladestrom vom ersten Versorgungsspannungsausgang 20 des Sprechkreises 30 über den ersten p-Kanal-Mosfet 50, den Überbrückungswiderstand 65 und den ersten Widerstand 85 zur Ladestrombegrenzung auf den Kondensator 15 fließt und diesen auflädt. Das Fernsprechendgerät befindet sich dabei im Gesprächszustand. Der Ladestrom ist durch den Überbrückungswiderstand 65 und den ersten Widerstand 85 zur Ladestrombegrenzung auf maximal 4 mA begrenzt. Wird die Schleife des Fernsprechendgerätes durch Programmierung beispielsweise von Zielwahltasten oder Zugangsberechtigungsoptionen seitens des Benutzers belegt, so befindet sich das Fernsprechendgerät in einem Programmierzustand. In diesem Fall werden sowohl der erste als auch der dritte p-Kanal-Mosfet 50 und 60 durch ein entsprechendes Steuersignal am ersten Steuereingang 51 und am dritten Steuereingang 61 seitens der Steuerung 1 durchgeschaltet. Der Ladestrom wird dann nur noch durch den ersten Widerstand 85 zur Ladestrombegrenzung begrenzt, so daß eine Schnelladung des Kondensators 15 mit maximal 10 mA möglich ist. Wird bei belegter Schleife Lauthör- oder Freisprechbetrieb gewählt, so ist kein Strom für die Ladung des Kondensators abzweigbar, und der erste Steuereingang 51 erhält ein Steuersignal von der Steuerung 1, mit dem der erste p-Kanal-Mosfet 50 geöffnet ist, so daß kein Ladestrom auf den Kondensator 15 fließen kann. Dasselbe gilt für den IWV-Wahlzustand, in dem ebenfalls kein Strom mehr für die Ladung des Kondensators 15 übrig ist.

Im Tonruffall wird die Versorgungsspannung VB mit 6,3V erzeugt. Diese Versorgungsspannung dient in erster Linie zur Versorgung der Endstufe des Lautsprechers 102, die die Tonrufsignale verstärkt und im Lautsprecher 102 wiedergibt. Die erzielbare Lautstärke der Tonrufsignale im Lautsprecher 102 ist abhängig vom Strom, den die Endstufe aus der Versorgungsspannung VB entnehmen kann. Während des Tonrufs gibt die Steuerung 1 ein Steuersignal an den zweiten Steuereingang 56 ab, so daß der zweite p-Kanal-Mosfet 55 durchschaltet und ein Ladestrom über den zweiten p-Kanal-Mosfet 55 und den zweiten Widerstand 90 zur Ladestrombegrenzung auf den Kondensator 15 fließen kann. Dabei wird der Ladestrom aufgrund der gewählten Dimensionierung für den zweiten Widerstand 90 auf maximal 1 mA begrenzt, so daß die Lautstärke des Tonrufs nur unwesentlich verringert wird. Dennoch kann der Kondensator 15 somit auch dann geladen werden, wenn der Benutzer die Schleife nicht belegt und das Telefon angerufen wird.

Bei aktiviertem Leistungsmerkmal 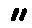 Caller ID", das die Übertragung und Auswertung eines Rufinformationssignals ermöglicht, ergibt sich der im folgenden beschriebene Ablauf im Fernsprechendgerät bei einem ankommenden Ruf. Aus dem ankommenden Rufsignal erzeugt der Sprechkreis 30 über den Sperrwandler die Versorgungsspannung VB für die Endstufe des Lautsprechers 102 zur akustischen Wiedergabe des Tonrufs. Die von der Versorgungsspannung VB abgeleitete Spannung VMP wird der Steuerung 1 zugeführt, die überwacht, ob die Ruffrequenz gültig ist und bei gültiger Ruffrequenz die Tonrufsignale für den Lautsprecher 102 erzeugt. Gleichzeitig wird in der Steuerung 1 auch die Zeitdauer des Rufsignals überwacht. Dabei wird geprüft, ob ein Rufsignal, das zu einem Doppelruf gehört, der bei Anschluß des Fernsprechendgerätes an eine Nebenstellenanalage, beispielsweise einen externen Ruf kennzeichnet, oder ein einfaches Rufsignal zur Kennzeichnung beispielsweise eines internen Rufes, vorliegt. Nach Ende des ersten Rufsignals bei einem einfachen Rufsignal und nach Ende des zweiten Rufsignals bei einem Doppelruf wird die Eingangsstufe 10 für die Übertragung eines Rufinformationssignals von der Vermittlungsstelle zum Fernsprechendgerät eingeschaltet, die nach einer Pause von 500 ms bis 2 s nach Ende des letzten Ruftones stattfindet. Der sechste Steuereingang 81 erhält dabei von der Steuerung 1 ein Steuersignal, das den sechsten p-Kanal-Mosfet 80 durchschaltet, so daß das Filter 110 und der Komparator 111 vom Kondensator 15 mit Spannung versorgt werden. Auch der fünfte Steuereingang 76 erhält ein Steuersignal, das den fünften p-Kanal-Mosfet 75 durchschaltet, so daß die Steuerung 1 ebenfalls aus dem Kondensator 15 mit Spannung versorgt wird. Der das Rufinformationssignal enthaltende Datenstrom wird dann durch das Filter 110 und den Komparator 111 aufbereitet und in der Steuerung 1 ausgewertet. Nach Ende der Übertragung hat die Steuerung die Rufinformation ausgewertet und kann diese im EEPROM 104 ablegen und an der Anzeigevorrichtung 5 anzeigen. Zur Anzeige der Rufinformation, beispielsweise in Form der Rufnummer, wird die Spannungsversorgung der Anzeigevorrichtung 5 zugeschaltet, indem die Steuerung 1 ein Steuersignal an den vierten Steuereingang 71 überträgt, so daß der vierte p-Kanal-Mosfet 70 durchgeschaltet wird und die Anzeigevorrichtung 5 aus dem Kondensator 15 mit Spannung versorgt werden kann. Daraufhin überträgt die Steuerung 1 die Rufinformation des anrufenden Teilnehmers an die Anzeigevorrichtung 5 und der angerufene Teilnehmer kann dort ablesen, wer ihn anruft. Da die Eingangsstufe 10 mit dem Filter 110 und dem Komparator 111 dann nicht mehr gebraucht werden, wird die Versorgung dieses Schaltungsteiles sofort nach Ende der Übertragung durch ein entsprechendes an den sechsten Steuereingang 81 übertragenes Steuersignal zum Öffnen des sechsten p-Kanal-Mosfets 80 abgeschaltet, um Energie zu sparen. Zwischen dem Ende der Übertragung der Rufinformation und dem nächsten Rufsignal ist je nach Signalisierung eine Pause von ca. 200 ms. In dieser Zeit bleiben die Steuerung 1 und die Anzeigevorrichtung 5 aktiv und nehmen weiter Energie aus dem Kondensator 15 auf. Während des nächsten Rufsignals werden die Steuerung 1 und die Anzeigevorrichtung 5 wieder vom Sprechkreis 30 direkt aus der am dritten Versorgungsspannungsausgang 120 anliegenden Versorgungsspannung VMP versorgt. Dabei werden der vierte und der fünfte p-Kanal-Mosfet 70 und 75 jeweils durch ein entsprechendes Steuersignal am vierten und am fünften Steuereingang 71 und 76 von der Steuerung 1 geöffnet. Am Ende jedes Rufsignals wird dann wieder auf die beschriebene Weise auf die Versorgung aus dem Kondensator 15 umgeschaltet. Dabei wird die Rufnummer so lange in der Anzeigevorrichtung 5 angezeigt, wie zugehörige Rufsignale vom Fernsprechendgerät empfangen werden. Dazu wird in der Steuerung 1 die Zeit zwischen zwei Rufsignalen detektiert und ausgewertet, so daß Rufpausen zwischen Rufsignalen unterschiedlicher Teilnehmer und zwischen Rufsignalen eines einzigen Rufes unterschieden werden können. Liegt ein neuer Ruf vor, so muß auch die Eingangsstufe 10 wieder mit Energie versorgt werden. So handelt es sich bei einer Rufpause von bis zu maximal 4 s noch um denselben Ruf, der durch die ausgewertete und angezeigte Rufinformation gekennzeichnet ist. Bei einer Rufpause von mehr als 5 s kann die Steuerung 1 durch entsprechende an den vierten Steuereingang 71 und den fünften Steuereingang 76 übertragene Steuersignale den vierten p-Kanal-Mosfet 70 und den fünften p-Kanal-Mosfet 75 öffnen und somit ihre eigene Spannungsversorgung und die der Anzeigevorrichtung 5 abschalten. Der Vorgang ist für die bis dahin angezeigte Rufinformation abgeschlossen. Bei der Detektion des nächsten Rufsignals startet ein neuer Vorgang in der beschriebenen Weise. Die Rufinformation des rufenden Teilnehmers wird also so lange angezeigt, wie noch Rufsignale, die zu dieser Rufinformation gehören, empfangen werden, wobei die Anzeige erst nach einer Rufpause von 4 s nach dem letzten zu dieser Rufinformation gehörenden Rufsignal abgeschaltet wird.

In einem weiteren Ausführungsbeispiel können als gesteuerte Schalter auch Bipolartransistoren eingesetzt werden.

## Patentansprüche

1. Fernsprechendgerät mit einer Steuerung (1), die mit einer Anzeigevorrichtung (5) und einer Eingangsstufe (10) zur Aufbereitung von bei ankommenden Rufen übertragenen Rufinformationen verbunden ist, wobei die Anzeigevorrichtung (5) insbesondere zur alphanumerischen Anzeige der Rufinformationen dient, und wobei das Fernsprechendgerät durch das an das Fernsprechendgerät anschließbare Telefonnetz mit Energie versorgt wird, dadurch gekennzeichnet, daß bei einem ankommenden Ruf ein im Fernsprechendgerät befindlicher Energiespeicher (15) während des Ruftons mit Energie aufladbar ist und während der Ruftonpause zur Energieversorgung zumindest der Steuerung (1), der Anzeigevorrichtung (5) und der Eingangsstufe (10) dient.

2. Fernsprechendgerät nach Anspruch 1, dadurch gekennzeichnet, daß der Energiespeicher (15) während der Belegung der Fernsprechschleife aufladbar ist.

3. Fernsprechendgerät mit einer Steuerung (1), die mit einer Anzeigevorrichtung (5) und einer Eingangsstufe (10) zur Aufbereitung von bei ankommenden Rufen übertragenen Rufinformationen verbunden ist, wobei die Anzeigevorrichtung (5) insbesondere zur alphanumerischen Anzeige der Rufinformationen dient, und wobei das Fernsprechendgerät durch das an das Fernsprechendgerät anschließbare Telefonnetz mit Energie versorgt wird, dadurch gekennzeichnet, daß ein im Fernsprechendgerät befindlicher Energiespeicher (15) während der Belegung der Fernsprechschleife aufladbar ist und bei einem ankommenden Ruf während der Ruftonpause zur Energieversorgung zumindest der Steuerung (1), der Anzeigevorrichtung (5) und der Eingangsstufe (10) dient.

4. Fernsprechendgerät nach Anspruch 3, dadurch gekennzeichnet, daß der Energiespeicher (15) während des Ruftons bei einem ankommenden Ruf mit Energie aufladbar ist.

5. Fernsprechendgerät nach einem der vorherigen Ansprüche, dadurch gekennzecihnet, daß der Energiespeicher (15) durch ein Steuersignal der Steuerung (1) schaltbar mit mindestens einem Versorgungsspannungsausgang (20, 25) des Sprechkreises (30) des Fernsprechendgerätes verbunden ist, wobei die Verbindung zum Laden des Energiespeichers (15) durch entsprechende Steuersignale der Steuerung (1) geschaltet ist und daß der Energiespeicher (15) schaltbar mit dem jeweiligen Versorgungsspannungseingang (35, 40, 45) der Steuerung (1), der Anzeigevorrichtung (5) und der Eingangsstufe (10) verbunden ist, wobei diese Verbindungen jeweils in einem Zeitraum zwischen den Rufsignalen eines ankommenden Rufes durch entsprechende Steuersignale der Steuerung (1) geschaltet sind.

6. Fernsprechendgerät nach Anspruch 2 und 5 oder 3 und 5, dadurch gekennzeichnet, daß der elektrische Energiespeicher (15) über einen ersten gesteuerten Schalter (50) mit einem für Schleifenbelegung im Fernsprechendgerät vorgesehenen Versorgungsspannungsausgang (20) des Sprechkreises (30) verbindbar ist und daß von der Steuerung (1) ein Steuersignal zum Schließen des ersten gesteuerten Schalters (50) an den Steuereingang (51) des ersten gesteuerten Schalters (50) abgebbar ist, falls Schleifenbelegung vorliegt.

7. Fernsprechendgerät nach Anspruch 1 und 5 oder 4 und 5 oder 4 und 6, dadurch gekennzeichnet, daß der elektrische Energiespeicher (15) über einen zweiten gesteuerten Schalter (55) mit dem für Tonruf im Fernsprechendgerät vorgesehenen Versorgungsspannungsausgang (25) des Sprechkreises (30) verbindbar ist und daß die Steuerung (1) bei Tonruf ein Steuersignal zum Schließen des zweiten gesteuerten Schalters (55) an den Steuereingang (56) des zweiten gesteuerten Schalters (55) abgibt.

8. Fernsprechendgerät nach Anspruch 6, dadurch gekennzeichnet, daß zwischen dem ersten gesteuerten Schalter (50) und dem elektrischen Energiespeicher (15) ein dritter gesteuerter Schalter (60) angeordnet ist, der bei Schleifenbelegung in einem Programmierzustand des Fernsprechendgerätes durch ein an seinen Steuereingang (61) übertragenes Steuersignal der Steuerung (1) geschlossen wird und daß dem dritten gesteuerten Schalter (60) ein Widerstand (65) parallel geschaltet ist.

9. Fernsprechendgerät nach einem der vorherigen Ansprüche, dadurch gekennzeichnet, daß der elektrische Energiespeicher (15) über einen vierten gesteuerten Schalter (70) mit dem Versorgungsspannungseingang (40) der Anzeigevorrichtung (5), über einen fünften gesteuerten Schalter (75) mit dem Versorgungsspannungseingang (35) der Steuerung (1) und über einen sechsten gesteuerten Schalter (80) mit dem Versorgungsspannungseingang (45) der Eingangsstufe (10) verbindbar ist und daß von der Steuerung (1) jeweils in einem Zeitraum zwischen den Rufsignalen eines ankommenden Rufes Steuersignale zum Schließen des vierten, fünften und sechsten gesteuerten Schalters (70, 75, 80) an den Steuereingang (71, 76, 81) des jeweiligen gesteuerten Schalters (70, 75, 80) abgebbar sind.

10. Fernsprechendgerät nach Anspruch 9, dadurch gekennzeichnet, daß nach Übertragung der Rufinformation der sechste gesteuerte Schalter (80) in dem Zeitraum zwischen den Rufsignalen des ankommenden Rufes durch entsprechende an den Steuereingang (81) des sechsten gesteuerten Schalters (80) übertragene Steuersignale von der Steuerung (1) geöffnet bleibt.

11. Fernsprechendgerät nach einem der vorherigen Ansprüche, dadurch gekennzeichnet, daß dem elektrischen Energiespeicher (15) mindestens ein Widerstand (85, 90) zur Ladestrombegrenzung vorgeschaltet ist.
